# EUROPÄISCHE PATENTSCHRIFT

(11) **EP 2 313 762 B1**
(45) Veröffentlichungstag und Bekanntmachung des Hinweises auf die Patenterteilung: **16.05.2012**
(21) Anmeldenummer: 09777063.0
(22) Anmeldetag: 09.07.2009
(51) Int. Cl.: G01N 21/90

(54) **LEERFLASCHENINSPEKTION**
EMPTY BOTTLE INSPECTION
INSPECTION DES BOUTEILLES VIDES

(30) Priorität: 14.08.2008 DE 102008037727
(43) Veröffentlichungstag der Anmeldung: 27.04.2011
(73) Patentinhaber: KHS GmbH, 44143 Dortmund (DE)
(72) Erfinder: WIEMER, Heinrich, 21033 Hamburg (DE); BÖCKER, Horst, 58239 Schwerte (DE)
(74) Vertreter: Ehmer, Wilfried
(86) Internationale Anmeldenummer: PCT/EP2009/004974
(87) Internationale Veröffentlichungsnummer: WO 2010/017863

(56) Entgegenhaltungen:
- EP-A2- 1 724 569
- WO-A1-2005/071391
- WO-A2-2006/011803
- FR-A1- 2 882 148
- JP-A- 11 201 906
- JP-A- 57 007 546
- US-A- 3 684 385
- US-A- 4 367 405
- US-A- 5 486 692
- DATABASE WPI Week 200443 2. März 2004 (2004-03-02) Thomson Scientific, London, GB; AN 2004-459125 XP002545463 -& KR 2004 017 912 A 2. März 2004 (2004-03-02)

## Beschreibung

Die Erfindung betrifft eine Inspektionsvorrichtung zum Kontrollieren von Flaschen oder dergleichen Behälter, umfassend zumindest eine Beleuchtungseinheit und eine Kamera, welche eine erste Inspektionsbrücke bilden.

Derartige Flaschen oder dergleichen Behälter können für Flüssigkeiten, beispielsweise für Getränke verwendet werden. Die Behälter können aus einem transparenten oder transluzenten Material, beispielsweise aus Glas oder aus einem transluzenten Kunststoff, z.B. PET bestehen. Die Flaschen oder dergleichen Behälter werden im Leerzustand bevorzugt nach ihrer Reinigung auf einem Transporteur an der Inspektionsvorrichtung vorbeigeführt. Hierzu ist eine Beleuchtungseinrichtung beispielsweise so zu der beispielhaften Flasche angeordnet, dass diese durchleuchtet wird wobei dazu gegenüberliegend die zumindest erste Kamera angeordnet ist. Die Beleuchtungseinrichtung durchleuchtet die beispielhafte Flasche, so dass die zumindest erste Kamera kontrollieren kann, ob beispielsweise Fremdstoffe wie z.B. Klebefolien, Verpackungsfolien (Cellophan) oder andere unerwünschte Gegenstände, Verschmutzungen oder Beschädigungen in bzw. an der Flasche vorhanden sind. Die Beleuchtungseinrichtung mit der dazu gegenüberliegenden Kamera kann auch als Inspektionsbrücke bezeichnet werden. Mittels dieser ersten Inspektionsbrücke (Beleuchtungseinrichtung/Kamera) wird aber nur ein bestimmter Bereich der beispielhaften Flasche kontrolliert. Um ein Gesamtbild der beispielhaften Flasche erhalten zu können, sind deshalb in Transportrichtung der beispielhaften Flasche gesehen aufeinander folgende Inspektionsbrücken vorgesehen. Auf dem Weg der jeweiligen Flaschen zu den jeweils folgenden Inspektionsbrücken werden die beispielhaften Flaschen dabei jeweils um 45° weiter verdreht, um dann jeweils eine Aufnahme von einem jeweils anderen Bereich zu erhalten wenn die beispielhafte Flasche die so genannten Inspektionsbrücke passiert. Von daher sind vier aufeinander folgende so genannte Inspektionsbrücken erforderlich, um die beispielhafte Flasche vollständig zu inspizieren. Dies bedeutet aber nachteiliger Weise, dass die Inspektionsvorrichtung in Transportrichtung gesehen eine große Erstreckung aufweisen muss, um die beispielhafte Flasche vollständig zu inspizieren, da mindestens vier aufeinander folgende so genannte Inspektionsbrücken erforderlich sind.
In dem Dokument W02006/011803-A2 wird eine Vorrichtung und ein Verfahren zum Nachweis von Fremdstoffen in mit Flüssigkeit gefüllten Behältern offenbart. Der Transport der Behälter findet in einer im wesentlichen geraden Linie statt, wobei jeder Behälter mit mehreren fest angeordneten Lichtquellen beleuchtet wird und eine Inspektion der Behälter aus zwei oder mehr verschiedenen Richtungen mit Kameras stattfindet.

Der Erfindung liegt daher die Aufgabe zugrunde, eine Inspektionsvorrichtung der Eingangs genannten Art mit einfachen Mitteln so zu verbessern, dass die vorgenannten Nachteile bei einer vollständigen Inspektion der Behälter bzw. der beispielhaften Flaschen vermieden sind.

Erfindungsgemäß wird die Aufgabe durch eine Inspektionsvorrichtung mit den Merkmalen des Anspruchs 1 gelöst, wobei die Inspektionsbrücke an ihrer ersten Inspektionsseite eine erste Beleuchtungseinrichtung und eine erste Kamera aufweist, wobei an einer zur ersten Inspektionsseite gegenüberliegenden Inspektionsseite der Inspektionsbrücke eine zweite Beleuchtungseinrichtung und eine zweite Kamera angeordnet ist, und ein Verfahren zur Inspektion mit den Merkmalen des Anspruchs 10.

Eine Inspektionsbrücke im Sinne der Erfindung ist eine Vorrichtung, welche bezogen auf einen Transporteur zwei gegenüberliegende Inspektionsseiten aufweist, wobei ein zu inspizierender Behälter bzw. ein Flasche entlang einer Transportrichtung bevorzugt mittig zwischen den einander gegenüberliegenden Seiten an diesen vorbeigeführt wird.

Die erste Beleuchtungseinrichtungweist eine Lichtquelle, ein erstes optisches Bauteil und einen Strahlteiler (Beamsplitter) auf.

Das erste optische Bauteil ist bezogen auf die Lichtquelle zwischen dieser und dem Strahlteiler angeordnet. Das erste optische Bauteil weist sinnvoller Weise eine Linse, bevorzugt eine Fresnel-Linse, einen Polarisationsfilter und Diffusormaterial auf. Der Polarisationsfilter ist in bevorzugter Ausgestaltung als Polarisationsfolie ausgeführt.

Günstiger Weise ist die Linse in ihrer bevorzugten Ausgestaltung als Fresnel-Linse quasi als erste optische Schicht des ersten optischen Bauteils bezogen auf die Lichtquelle vorgesehen. Als quasi zweite optische Schicht des ersten optischen Bauteils, welche bezogen auf die Lichtquelle hinter der ersten optischen Schicht angeordnet ist, sind der Polarisationsfilter und das Diffusormaterial vorgesehen.

In bevorzugter Ausgestaltung ist die Lichtquelle als LED-Lampe ausgeführt.

Der Strahlteiler (Beamsplitter) ist vorteilhaft so ausgeführt, dass dieser aus der Lichtquelle emittiertes Licht durchlässt, andererseits aber quasi als Spiegel wirkt. Dies bedeutet, dass der Strahlteiler dass von der korrespondierenden Lichtquelle emittierte Licht durchlässt, wobei auf der zur korrespondierenden Lichtquelle gegenüberliegenden Seite des Strahlteilers einfallendes Licht reflektiert wird. Die zur korrespondierenden Lichtquelle gegenüberliegende Seite des Strahlteilers kann daher auch als Spiegelseite bezeichnet werden.

Die zur ersten Beleuchtungseinrichtung an der Inspektionsbrücke gegenüberliegend angeordnete zweite Beleuchtungseinrichtung ist bevorzugt identisch zur ersten Beleuchtungseinrichtung ausgeführt.

Weiter weist die Inspektionsbrücke mit ersten Kamera korrelierende optische Spiegel auf, welche so ausgerichtet sind, dass die erste Kamera auf die Spiegelseite des Strahlteiler der ersten Beleuchtungseinrichtung ausgerichtet ist, und ein Bild eines Behälters aufnehmen kann. Selbstverständlich weist die Inspektionsbrücke auf der dazu gegenüberliegenden Seite ebenfalls zur zweiten Kamera korrelierende optische Spiegel auf.

Insofern wird eine erste Inspektionsbrücke gebildet welche auf ihren gegenüberliegenden Seiten bzw. auf ihren gegenüberliegenden Inspektionsseiten, bezogen auf eine Mittelachse bzw. bezogen auf den Transporteur jeweils identisch ausgeführt ist.

Mit der ersten Inspektionsbrücke kann ein Behälter, zum Beispiel eine Flasche bezogen auf ihren halben Umfang im Durchlichtverfahren inspiziert werden.

Die beispielhafte Flasche wird auf einem Transporteur der Inspektionsvorrichtung bzw. der ersten Inspektionsbrücke zugeführt. Die Lichtquelle der ersten Beleuchtungseinrichtung emittiert dabei pulsartig einen blitzartigen Lichtstrahl, welche die beispielhafte Flasche durchleuchtet. Das Bild der durchleuchteten Flasche spiegelt sich an dem Strahlteiler (Spiegelseite) der zweiten Beleuchtungseinrichtung, so dass die zweite Kamera über die optischen Umleitungen der vorgesehenen optischen Spiegel ein entsprechendes Bild aufnehmen kann. Natürlich emittiert die zweite Beleuchtungseinrichtung, kein Licht während die erste Beleuchtungseinrichtung den blitzartigen LED-Lichtstrahl aussendet.

Nach der Aufnahme des ersten Bildes wird die beispielhafte Flasche in Transportrichtung weitergefördert. Üblicher Weise ist der Transporteur quasi als Stetigförderer ausgeführt, wobei eine Vielzahl von Flaschen auf dem Transporteur in Transportrichtung gesehen hintereinander angeordnet sind. Die einzelnen Flaschen sind in Transportrichtung gesehen etwas zu einander beabstandet, so dass ein Spalt zwischen direkt folgenden Behältern gebildet ist. Diesen Umstand macht sich die Erfindung zu nutze, indem kurz (z.B. 100µs) nach dem Durchleuchten der Flasche mittels der ersten Beleuchtungseinrichtung die zweite Beleuchtungseinrichtung aktiviert wird, blitzartiges Licht aussendet, und die Flasche so von der bezogen auf die erste Beleuchtungseinrichtung anderen Seite durchleuchtet. Das Bild der durchleuchteten Flasche spiegelt sich an dem Strahlteiler der ersten Beleuchtungseinrichtung, so dass von der ersten Kamera ein entsprechendes Bild aufgenommen werden kann. Vorteilhaft ist hierbei, dass die erste Kamera so ausgerichtet ist, dass diese der sich auf dem Transporteur in Transportrichtung bewegenden Flasche quasi nachblickt, so dass ein zum ersten Bild um beispielsweise 45° quasi verdrehtes Bild der Flasche aufgenommen wird, ohne dass die Flasche dabei auf dem Transporteur um den entsprechenden Betrag verdreht werden müsste. Insofern wird aufgrund der erfindungsgemäßen Ausgestaltung der Inspektionsvorrichtung noch ein vereinfachter Transporteur einsetzbar sein, welcher ohne Verdrehvorrichtungen ausgeführt werden könnte. Mittels der ersten Inspektionsbrücke kann so vorteilhaft ein halber Umfang der beispielhaften Flasche inspiziert werden.

Um noch den bisher nicht inspizierten Bereich der beispielhaften Flasche zu inspizieren, ist zweckmäßiger Weise vorgesehen, dass der ersten Inspektionsbrücke in Transportrichtung der beispielhaften Flasche gesehen eine zweite Inspektionsbrücke folgt. Die zweite Inspektionsbrücke ist günstiger Weise identisch zur ersten Inspektionsbrücke, also mit einer dritten und vierten Beleuchtungseinrichtung bzw. Kamera und dazu korrelierenden optischen Spiegeln, ausgeführt, und ermöglicht eine Inspektion der bisher noch nicht inspizierten Bereiche der beispielhaften Flasche.

Insofern wird eine verbesserte Inspektionseinrichtung zur Verfügung gestellt, welche eine vollständige Inspektion der beispielhaften Flasche mit nur zwei Inspektionsbrücken ermöglicht. Die erfindungsgemäße Inspektionsvorrichtung kann somit im Vergleich zum Stand der Technik in ihrer in Transportrichtung der beispielhaften Flasche gesehenen Längserstreckung aufgrund des Wegfalls von zwei der bisher erforderlichen vier Inspektionsbrücken kürzer ausgeführt werden. Damit wird ein erheblicher Platzbedarf eingespart. Weiter ist es vorteilhaft im Sinne der Erfindung, dass die beispielhafte Flasche nicht mehr um ihre Hochachse verdreht werden muss. Insofern kann auch bei der Auslegung des Transporteurs auf Verdreheinrichtungen verzichtet werden.

Die erfindungsgemäße Inspektionseinrichtung eignet sich bei ihrer kompakten Bauweise bevorzugt zur Leerflascheninspektion. Mittels der erfindungsgemäßen Inspektionseinrichtung können Leerflaschen im Durchleuchtungsverfahren beispielsweise auf in ihrem Inneren befindliche, unerwünschte Fremdstoffe, Verschmutzungen oder auf Beschädigungen inspiziert werden, um nur einige, nicht beschränkend wirkende Inspektionsbeispiele zu nennen.

Weitere vorteilhafte Ausgestaltungen der Erfindung sind in den Unteransprüchen und der folgenden Figurenbeschreibung offenbart. Es zeigen
- Fig. 1: eine erfindungsgemäße Inspektionsvorrichtung mit einer einzelnen Inspektionsbrücke, deren Inspektionsseiten identisch ausgeführt sind, und
- Fig. 2: eine vergrößerte Darstellung einer Beleuchtungseinrichtung.

In den unterschiedlichen Figuren sind gleiche Teile stets mit denselben Bezugszeichen versehen, weswegen diese in der Regel auch nur einmal beschrieben sind.

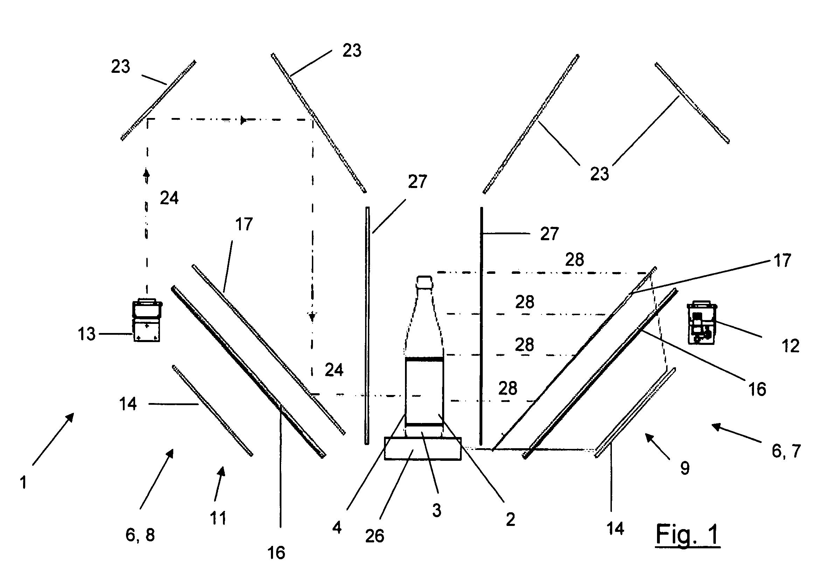

Figur 1 zeigt eine Inspektionsvorrichtung 1 zur Kontrolle von Flaschen 2 oder dergleichen Behälter. Im nachfolgenden werden Flaschen 2 oder dergleichen Behälter allgemein als Flasche 2 bezeichnet. Die Flasche 2 kann aus einem transparenten oder transluzenten Material, beispielsweise aus Glas oder aus einem transluzenten Kunststoff, z.B. PET bestehen.

Die Flasche 2 weist einen Boden 3 und eine Seitenwand 4 auf. Gegenüberliegend zum Boden 2 ist eine Mündungsöffnung angeordnet. Mit der Inspektionsvorrichtung 1 soll bevorzugt das Innere der Flasche 2 bevorzugt nach ihrer Reinigung z.B. auf unerwünschte Gegenstände, auf Verschmutzungen und/oder Beschädigungen kontrolliert werden. Insofern kann auch von einer Leerflascheninspektion gesprochen werden.

Die Inspektionsvorrichtung 1 weist eine erste Inspektionsbrücke 6 welche auf ihren jeweiligen Inspektionsseiten 7 und 8 jeweils eine Beleuchtungseinrichtung 9, 11 und eine Kamera 12,13 aufweist. Eine zweite Inspektionsbrücke ist in Transportrichtung der Flasche 2 gesehen hinter der ersten Inspektionsbrücke 6 angeordnet und nicht dargestellt. Die in der Zeichnungsebene rechte, also an der Inspektionsseite 7 angeordnete Beleuchtungseinrichtung 9 kann auch als erste Beleuchtungseinrichtung 9 und die auf derselben Seite angeordnete Kamera 12 als erste Kamera 12 bezeichnet werden. Analog dazu wird die in der Zeichnungsebene links gezeigte, also an der Inspektionsseite 8 angeordnete Beleuchtungseinrichtung 11 als zweite Beleuchtungseinrichtung 11 und die dort angeordnete Kamera 13 als zweite Kamera 13 bezeichnet.

Die erste Beleuchtungseinrichtung 9 ist identisch zur zweiten Beleuchtungseinrichtung 11 ausgeführt, weswegen nachfolgend lediglich die erste Beleuchtungseinrichtung 9 beschrieben wird.

Die erste Beleuchtungseinrichtung 9 weist eine Lichtquelle 14, ein erstes optisches Bauteil 16 und einen Strahlteiler 17 auf. Das erste optische Bauteil 16 ist zwischen der Lichtquelle 14 und dem Strahlteiler 17 angeordnet. Die dargestellten Abstände der jeweiligen Komponenten zueinander sind lediglich beispielhaft und nicht maßstabsgerecht.

Die Lichtquelle 14 ist als LED-Lichtquelle ausgeführt.

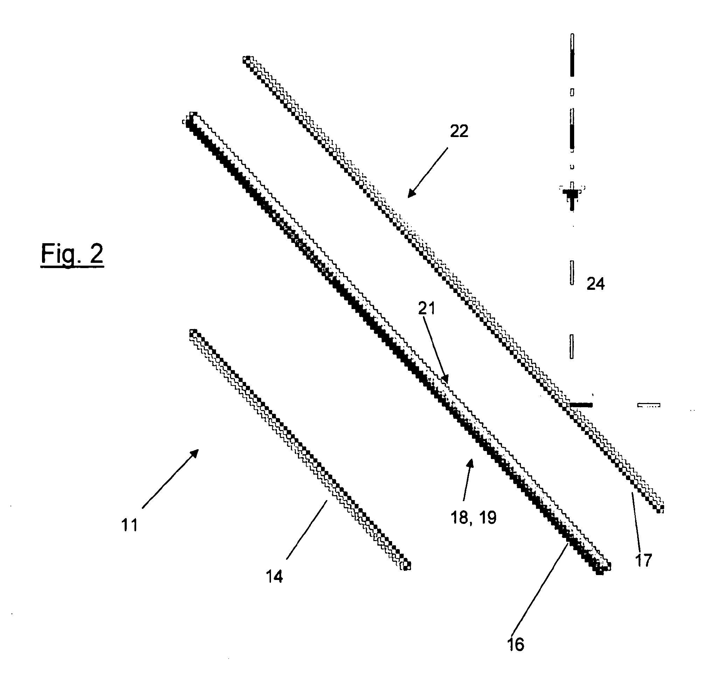

Das erste optische Bauteil 16 (Figur 2) weist als erste optische Schicht 18 eine Linse 19, bevorzugt eine Fresnel-Linse, und als zweite optische Schicht 21 einen Polarisationsfilter und Diffusormaterial auf. Die erste optisch Schicht 18 ist lichtquellenseitig angeordnet, wobei die zweite optische Schicht 21 strahlteilerseitig angeordnet ist. Der Polarisationsfilter ist als Polarisationsfolie aufgeführt, wobei das Diffusormaterial in bevorzugter Ausführung unter der Bezeichnung LSD® Light Shaping Diffusors bekannt ist. Bevorzugt sind LSD®60°, LSD®40°, und/oder LSD®30° Angle, Acrylic-UVT oder Glass-BK7 als Diffusormaterial denkbar.

Der Strahlteiler 17 der ersten Beleuchtungseinrichtung 9 ist so ausgeführt, dass dieser aus der Lichtquelle 14 der ersten Beleuchtungseinrichtung 9 emittiertes Licht durchlässt, andererseits aber als Spiegel wirkt. Dies bedeutet, dass der Strahlteiler 17 dass von der korrespondierenden Lichtquelle 14 emittierte Licht durchlässt, wobei auf der zur korrespondierenden Lichtquelle 14 gegenüberliegenden Seite des Strahlteilers 17 einfallendes Licht reflektiert wird. Diese Seite kann daher auch als Spiegelseite 22 (Figur 2) bezeichnet werden. In Figur 2 ist eine vergrößerte Darstellung der zweiten Beleuchtungseinrichtung 11 gezeigt.

Der ersten Kamera 12 sind auf der Inspektionsseite 7 korrelierende optische Spiegel 23 zugeordnet, so dass die erste Kamera 12 in Richtung zur Spiegelseite 22 ausgerichtet ist. Dies wird einem prinzipiell dargestellten Strahlpfeil 24 gezeigt, wobei die Kamera 12 natürlich mit einem Zoomobjektiv ausgeführt ist, was bedeutet, dass nicht nur der mittels des prinzipiellen Strahlpfeils 24 dargestellte Punkt, sondern die gesamte Spiegelseite 22 von der ersten Kamera 12 aufnehmbar ist.

Wie dargestellt ist die Inspektionsseite 8 identisch zur Inspektionsseite 7 ausgeführt.

Die beispielhafte Flasche 2 steht mit ihrem Boden 3 auf einem Transporteur 26 auf, und wird zwischen den Inspektionsseiten 7 und 8 an der ersten Inspektionsbrücke 6 entlang einer Transportrichtung vorbeigeführt. Zwischen den beiden Beleuchtungseinrichtungen 9 und 11 sowie der beispielhaften Flasche 2 ist jeweils ein zweites optisches Bauteil 27 angeordnet, welches einen Polarisationsfilter und Diffusormaterial aufweist.

Die Lichtquelle 14 der ersten Beleuchtungseinheit 9 an der Inspektionsseite 7 leuchtet blitzartig auf. Das emittierte Licht passiert das erste optische Bauteil 16 und den Strahlteiler 17, und gelangt durch das zweite optische Bauteil 27 zur Flasche und durchleuchtet diese. Dies ist mittels der Strahlpfeile 28 dargestellt.

Das Bild der durchleuchteten Flasche spiegelt sich an der Spiegelseite 22 des Strahlteilers 17 der Inspektionsseite 8 und wird von der zweiten Kamera 13 der Inspektionsseite 8 aufgenommen. Natürlich ist die Kamera 13 mit entsprechenden Bildbearbeitungsvorrichtungen verbunden.

Auf dem Transporteur 26 sind eine Vielzahl von Flaschen in Transportrichtung gesehen aufeinander folgend angeordnet, welche aber etwas zueinander beabstandet sind, so dass zwischen direkt aufeinander folgenden Flaschen 2 ein Spalt gebildet ist. Natürlich wird die Flasche 2 bei der zuvor beschriebenen ersten Aufnahme in Transportrichtung weiter befördert. Nachdem die Lichtquelle 14 der Inspektionsseite 7 deaktiviert ist, wird die Lichtquelle 14 der Inspektionsseite 8 aktiviert, so dass diese Licht blitzartig emittiert. Die beiden Lichtquellen 14 emittierenden quasi pulsartig blitzartiges Licht. Beispielsweise wird die Lichtquelle 14 der Inspektionsseite 8 um 100µs nach dem deaktivieren der Lichtquelle 14 der Inspektionsseite 7 aktiviert, ohne dass der angegebene Zeitbetrag beschränkend sein soll.

Das aus der Lichtquelle 14 der Inspektionsseite 8 emittierte Licht passiert das erste optische Bauteil 16 der Inspektionsseite 8, den Strahlteiler 17 der Inspektionsseite 8, das zweite optische Bauteil 27 der Inspektionsseite 8 und durchleuchtet die Flasche 2. Das Bild der durchleuchteten Flasche 2 spiegelt sich an der Spiegelseite 22 des Strahlteilers 17 der Inspektionsseite 7, und gelangt über die Umlenkung der zur ersten Kamera 12 korrelierenden optischen Spiegel 23 in die Kamera 12. Günstiger Weise ist der optische Weg der Kamera 12 so eingestellt, dass diese der Flasche 2 quasi in den Spalt hinterher blickt, so dass ein bezogen auf das erste Bild anderer Flaschenbereich aufgenommen wird. Der optische Weg ist dabei so einstellbar, dass ein bezogen auf das erste Bild um 45° verdrehtes Bild aufgenommen wird, ohne dass an dem Transporteur Verdrehvorrichtungen der Flasche angeordnet sein müssen. Selbstverständlich ist auch die Kamera 12 mit Bildverarbeitungsvorrichtungen verbunden.

Somit ist mit der ersten Inspektionsbrücke 6 bereits ein halber Umfang der beispielhaften Flasche 2 inspiziert. Mit der folgenden, nicht dargestellten Inspektionsbrücke können die noch nicht inspizierten Bereiche der beispielhaften Flasche 2 inspiziert werden.

Jede Inspektionsbrücke weist auf jeder Inspektionsseite 7 bzw. 8 jeweils eine Beleuchtungseinrichtung und jeweils eine Kamera auf. Vorteilhaft sind so bei zwei aufeinander folgenden Inspektionsbrücken vier Beleuchtungseinrichtungen und vier Kameras an der Inspektionsvorrichtung angeordnet. Diese sind aber vorteilhaft an lediglich zwei Inspektionsbrücken angeordnet. Zum inspizieren der beispielhaften Flasche muss diese bei passieren der Inspektionsvorrichtung nicht verdreht werden. Vielmehr kann mit der erfindungsgemäßen Inspektionsvorrichtung auf spezielle Verdrehvorrichtungen an dem Transporteur verzichtet werden.

In dem in Figur 1 dargestellten Ausführungsbeispiel ist die jeweilige Beleuchtungseinrichtung 9 bzw. 11 mit ihren Komponenten 14, 16 und 17 in einem 45° Winkel bezogen auf die Flasche 2 angeordnet. Dieser Winkelbetrag ist natürlich nur beispielhaft zu verstehen. In der dargestellten Ausführung ist der Winkel so gewählt, dass sich die Flasche 2 vollständig auf der Spiegelseite 22 des Strahlteilers 17 spiegelt.

Selbstverständlich kann die jeweilige Beleuchtungseinrichtung mit ihren Komponenten eingehaust sein.

### Bezugszeichenliste

- 1: Inspektionsvorrichtung
- 2: Flasche
- 3: Boden
- 4: Seitenwand von 2
- 6: lnspektionsbrücke
- 7: Inspektionsseite von 6
- 8: Inspektionsseite von 6
- 9: Beleuchtungseinrichtung
- 11: Beleuchtungseinrichtung
- 12: Kamera
- 13: Kamera
- 14: Lichtquelle
- 16: Erstes optisches Bauteil
- 17: Strahlteiler
- 18: Erste optische Schicht
- 19: Linse
- 21: Zweite optische Schicht
- 22: Spiegelseite von 17
- 23: Optische Spiegel
- 24: Strahlpfeil
- 26: Transporteur
- 27: Zweites optisches Bauteil
- 28: Strahlpfeile

## Patentansprüche

1. Inspektionsvorrichtung zum Kontrollieren von Flaschen (2) oder dergleichen Behälter, umfassend zumindest zwei Beleuchtungseinrichtungen (9, 11) und zwei Kameras (12,13), welche eine Inspektionsbrücke (6) bilden, wobei die Inspektionsbrücke (6) an ihrer ersten Inspektionsseite (7) eine erste Beleuchtungseinrichtung (9) und eine erste Kamera (12) aufweist, und an einer zur ersten Inspektionsscite (7) gegenüberliegenden Inspektionsseite (8) der Inspektionsbrücke (6) die zweite Beleuchtungseinrichtung (11) und die zweite Kamera (13) angeordnet ist, und wobei die zweite Beleuchtungseinrichtung (11) identisch zur ersten Beleuchtungseinrichtung (9) ausgeführt ist, wobei die Beleuchtungseinrichtung (9, 11) eine Lichtquelle (14), ein erstes optisches Bauteil (16) und einen Strahlteiler (17) aufweist, und wobei das erste optische Bauteil (16) zwischen der Lichtquelle (14) und dem Strahlteiler (17) angeordnet ist, **dadurch gekennzeichnet, dass**
das erste optische Bauteil (16) jeweils eine erste optische Schicht (18) und eine zweite optische Schicht (21) aufweist, wobei die erste optische Schicht (18) als Linse (19) ausgeführt ist, und wobei die zweite optische Schicht (21) aus einem Polarisationsfilter und einem Diffusormaterial gebildet ist, wobei die Strahlteiler (17) eine Spiegelseite (22) und eine gegenüberliegende Seite aufweisen und so angeordnet sind, dass Licht aus der Lichtquelle (14) der jeweiligen Beleuchtungseinrichtung (9, 11) der einen inspektionsseiten (7. 9) in Richtung einer zu Inspizierenden Flasche (2) durchleitbar und diese Flasche (2) durchleuchtbar ist, und
Licht bzw. Bild einer durchleuchteten Flasche (2) an der Spiegelseite (22) des Strahlteilers (17) der jeweils anderen Inspektionsseite (9, 7) zur jeweiligen Kamera (12, 13) reflektierbar und von dieser erfassbar ist.

2. Inspektionsvorrlchtung nach Anspruch 1, **dadurch gekennzeichnet, dass** das erste optische Bauteil (16) als erste optische Schicht (18) eine Linse (19) aufweist, insbesondere eine Fresnel-Linse, und als zweite optische Schicht (21) einen Polarisationsfilter und Diffusormaterial aufweist, und wobei die erste optisch Schicht (18) ist lichtquellenseitig angeordnet und die zweite optische Schicht (21) strahlteilerseitig angeordnet ist.

3. Inspektionsvorrichtung nach Anspruch 2, **dadurch gekennzeichnet, dass** der Polarisationsfilter der zweiten optischen Schicht (21) als Polarisationsfolie aufgeführt ist.

4. Inspektionsvorrichtung nach Anspruch 3, **dadurch gekennzeichnet, dass** das Diffusormaterial aus der folgenden Gruppe von Produkten genommen ist: Acrylic-UVT oder Glass-BK7.

5. Inspektionsvorrichtung nach einem der vorhergehenden Ansprüche, **dadurch gekennzeichnet, dass** die Lichtquelle (14) als LED-Lichtquelle ausgeführt ist.

6. Inspektionsvorrichtung nach einem der vorhergehenden Ansprüche, **dadurch gekennzeichnet, dass** der ersten Kamera (12) der Inspektionsseite (7) und der zweiten Kamera (13) der Inspektionsseite (8) jeweils korrelierende optische Spiegel (23) zugeordnet sind.

7. Inspektionsvorrichtung nach einem der vorhergehenden Ansprüche, **dadurch gekennzeichnet, dass** der ersten Inspektionsbrücke (6) in Transportrichtung gesehen eine zweite Inspektionsbrücke folgt, welche identisch zur ersten Inspektionsbrücke (6) ausgeführt ist.

8. Inspektionsvorrichtung nach Anspruch 7, **dadurch gekennzeichnet, dass** der optische Weg der zweiten Inspektionsbrücke (6) derart eingestellt ist, dass ein bezogen auf das erste Bild der ersten Inspektionsbrücke (6) ein um 46° verdrehtes Bild aufgenommen wird, bei unverdreht ausgerichteter Flasche (2).

9. Inspektionsvorrichtung nach einem der vorhergehenden Ansprüche, **dadurch gekennzeichnet, dass** zwischen dem Strahlteiler (17) und dem Raum durch welchen eine zu inspizierende Flasche (2) hindurchleitbar ist, ein zweites optisches Bauteil (27) angeordnet, welches einen Polarisationsfilter und Diffusormaterial aufweist.

10. Verfahren zur Inspektion von Flaschen (2) oder dergleichen Behälter,
**dadurch gekennzeichnet dass**
mindestens zwei der Inspektionsvorrichtungen gemäß einer der Ansprüche 1 bis 6 verwendet werden, wobei auf einem Transporteur (26) eine Vielzahl von Flaschen (2) in Transportrichtung gesehen aufeinander folgend angeordnet werden, welche zueinander beabstandet sind, so dass zwischen direkt aufeinander folgenden Flaschen (2) ein Spalt gebildet ist, und die folgenden Schritte durchlaufen werden:
■ die Lichtquelle (14) der Beleuchtungseinheit (9) der Inspektionsseite (7) leuchtet bitzartig auf, das emittierte Licht passiert das erste optische Bauteil (16) und den Strahlteiler (17) und gelangt durch das zweite optische Bauteil (27) zur Flasche (2) und durchleuchtet diese,
■ das Bild der durchleuchteten Flasche spiegelt sich an der Spiegelseite (22) des Strahlteilers (17) der gegenüberliegenden Inspektionsseite (8) und wird von der zweiten Kamera (13) der Inspektionsselle (8) aufgenommen, welche mit einer entsprechenden Bildbearbeitungsvorrichtungen verbunden ist,
■ nachdem die Lichtquelle (14) der ersten Inspektionsseite (7) deaktiviert wurde, wird die Lichtquelle (14) zweiten Inspektionsseite (8) aktiviert und Licht blitzartig emittiert und wobei
■ die vorstehenden Schritte in analoger Weise durchgeführt werden.

11. Verfahren nach Anspruch 10, **dadurch gekennzeichnet, dass** die beiden Lichtquellen (14) abwechselnd pulsartiges bzw. blitzartiges Licht emittieren, indem die Lichtquelle (14) der jeweils anderen Inspektionsseite nach dem Deaktivieren der vorherigen Lichtquelle (14) aktiviert wird, insbesondere nach 100µs.

## Claims

1. An inspection apparatus for inspection of bottles (2) or similar containers, comprising at least two lighting devices (9, 11) and two cameras (12,13) which form an inspection bridge (6), where the inspection bridge (6) exhibits on its first inspection side (7) a first lighting device (9) and a first camera (12), and on an inspection side (8) of the inspection bridge (6) located opposite the first inspection side (7) the second lighting device (11) and the second camera (13) is arranged, and where the second lighting device (11) is executed identically to the first lighting device (9), where the lighting device (9, 11) exhibits a light source (14), a first optical component (16) and a beam splitter (17), and where the first optical component (16) is arranged between the light source (14) and the beam splitter (17), wherein
the first optical component (16) exhibits a first optical layer (18) and a second optical layer (21), where the first optical layer (18) is executed as a lens (19) and where the second optical layer (21) is formed from a polarisation filter and a diffusor material, where the beam splitters (17) exhibit a mirror side (22) and an opposite side and are arranged so that light from the light source (14) of the respective lighting device (9, 11) of the one inspection sides (7, 9) can be directed towards a bottle (2) to be inspected, this bottle (2) can be transilluminated, and
the light or image of a transilluminated bottle (2) can be reflected on the mirror side (22) of the beam splitter (17) of the other inspection side (9, 7) to the respective camera (12, 13) and be captured by it.

2. An inspection apparatus according to claim 1, wherein the first optical component (16) exhibits as first optical layer (18) a lens (19), in particular a Fresnel lens, and as second optical layer (21) a polarisation filter and diffusor material, the first optical layer (18) being is arranged on the side of the light source and the second optical layer (21) being arranged on the side of the beam splitter.

3. An inspection apparatus according to claim 2, wherein the polarisation filter of the second optical layer (21) is executed as a polarisation film.

4. An inspection apparatus according to claim 3, wherein the diffusor material is taken from the following group of products: acrylic UVT or BK7 glass.

5. An inspection apparatus according to any one of the preceding claims, wherein the light source (14) is executed as an LED light source.

6. An inspection apparatus according to any one of the preceding claims, wherein the first camera (12) of the inspection side (7) and the second camera (13) of the inspection side (8) are each associated with correlating optical mirrors (23).

7. An inspection apparatus according to any one of the preceding claims, wherein the first inspection bridge (6) is followed in transport direction by a second inspection bridge which is executed identically to the first inspection bridge (6).

8. An inspection apparatus according to claim 7, wherein the optical path of the second inspection bridge (6) is set in such a way that an image rotated 45° relative to the first image of the first inspection bridge (6) is captured, the bottle (2) being aligned unrotated.

9. An inspection apparatus according to any one of the preceding claims, wherein a second optical component (27) exhibiting a polarisation filter and diffusor material is arranged between the beam splitter (17) and the space through which a bottle (2) to be inspected can be guided.

10. A method for inspection of bottles (2) or similar containers, wherein at least two of the inspection apparatuses are used according to one of claims 1 to 6, a plurality of bottles (2) being arranged on a conveyor (26) which follow one another when viewed in transport direction and being spaced apart from one another so as to leave a gap between bottles (2) directly following one another, and the following steps being carried out:
■ the light source (14) of the lighting unit (9) of the inspection side (7) emits a flash of light, the emitted light traverses the first optical component (16) and the beam splitter (17) and passes through the second optical component (27) to the bottle (2) which it transilluminates,
■ the image of the transilluminated bottle is reflected on the mirror side (22) of the beam splitter (17) of the opposite inspection side (8) and is captured by the second camera (13) of the inspection side (8) which is connected to a corresponding image processing devices *[sic],*
■ after the light source (14) of the first inspection side (7) has been deactivated, the light source (14) second *[sic]* inspection side (8) is activated and a flash of light emitted, and where
■ the foregoing steps are carried out in analogue fashion.

11. A method according to claim 10 wherein the two light sources (14) emit alternately pulse-like and flash-like light in that the light source (14) of the respective other inspection side is activated after the deactivation of the previous light source (14), in particular after 100µs.

## Revendications

1. Dispositif d'inspection servant à contrôler des bouteilles (2) ou des récipients similaires, comportant au moins deux systèmes d'éclairage (9, 11) et deux caméras (12, 13), qui forment un pont d'inspection (6), sachant que le pont d'inspection (6) présente sur son premier côté d'inspection (7) un premier système d'éclairage (9) et une première caméra (12), et que le deuxième système d'éclairage (11) et la deuxième caméra (13) sont disposés au niveau d'un côté d'inspection (8) du pont d'inspection (6), faisant face au premier côté d'inspection (7), et sachant que le deuxième système d'éclairage (11) est réalisé de manière identique par rapport au premier système d'éclairage (9), sachant que le système d'éclairage (9, 11) présente une source de lumière (14), un premier élément optique (16) et un séparateur de faisceau (17), et sachant que le premier élément optique (16) est disposé entre la source de lumière (14) et le séparateur de faisceau (17), **caractérisé en ce que**
le premier élément optique (16) présente respectivement une première couche optique (18) et une deuxième couche optique (21), sachant que la première couche optique (18) est réalisée comme une lentille (19), et sachant que la deuxième couche optique (21) est formée à partir d'un filtre de polarisation et d'un matériau diffuseur, sachant que
les séparateurs de faisceau (17) présentent un côté miroir (22) et un côté opposé et sont disposés de telle manière que la lumière de la source de lumière (14) de chaque système d'éclairage (9, 11) du côté d'inspection (7, 9) au moins au nombre de un peut être dirigée dans la direction d'une bouteille (2) à inspecter et que cette bouteille (2) peut être éclairée, et
et **en ce que** la lumière et/ou l'image d'une bouteille (2) éclairée peut être réfléchie au niveau du côté miroir (22) du séparateur de faisceau (17) de l'autre côté d'inspection respectif (9, 7) vers chaque caméra (12, 13) et peut être détectée par cette dernière.

2. Dispositif d'inspection selon la revendication 1, **caractérisé en ce que** le premier élément optique (16) présente comme première couche optique (18) une lentille (19), en particulier une lentille de Fresnel, et en tant que deuxième couche optique (21) un filtre de polarisation et un matériau diffuseur, sachant que la première couche optique (18) est disposée du côté de la source de lumière et que la deuxième couche optique (21) est disposée du côté du séparateur de faisceau.

3. Dispositif d'inspection selon la revendication 2, **caractérisé en ce que** le filtre de polarisation de la deuxième couche optique (21) est réalisé comme un film de polarisation.

4. Dispositif d'inspection selon la revendication 3, **caractérisé en ce que** le matériau diffuseur est choisi parmi le groupe suivant de produits : de l'acrylique transparent aux UV ou du verre BK7.

5. Dispositif d'inspection selon l'une quelconque des revendications précédentes, **caractérisé en ce que** la source de lumière (14) est réalisée comme une source de lumière à DEL.

6. Dispositif d'inspection selon l'une quelconque des revendications précédentes, **caractérisé en ce que** des miroirs optiques (23) établissant respectivement des corrélations sont associés à la première caméra (12) du côté d'inspection (7) et à la deuxième caméra (13) du côté d'inspection (8).

7. Dispositif d'inspection selon l'une quelconque des revendications précédentes, **caractérisé en ce que** le premier pont d'inspection (6) est suivi, vu dans la direction de transport, d'un deuxième pont d'inspection, qui est réalisé de manière identique par rapport au premier pont d'inspection (6).

8. Dispositif d'inspection selon la revendication 7, **caractérisé en ce que** le chemin optique du deuxième pont d'inspection (6) est ajusté de telle manière qu'une image tournée de 45° par rapport à la première image du premier pont d'inspection (6) est enregistrée dans le cas d'une bouteille (2) orientée sans être tournée.

9. Dispositif d'inspection selon l'une quelconque des revendications précédentes, **caractérisé en ce qu'**est disposé entre le séparateur de faisceau (17) et l'espace, à travers lequel une bouteille (2) à inspecter peut être dirigée, un deuxième élément optique (27) qui présente un filtre de polarisation et un matériau diffuseur.

10. Procédé d'inspection de bouteilles (2) ou de récipients similaires,
**caractérisé en ce que**
au moins deux des dispositifs d'inspection selon l'une quelconque des revendications 1 à 6 sont utilisés, sachant qu'une pluralité de bouteilles (2), dans la direction de transport, sont disposées les unes après les autres sur le transporteur (26), lesquelles sont espacées entre elles de sorte qu'une fente est formée entre les bouteilles (2) se suivant directement, et **en ce que** les étapes suivantes ont lieu :
- la source de lumière (14) de l'unité d'éclairage (9) du côté d'inspection (7) éclaire à la manière d'un flash, la lumière émise traverse l'élément optique (16) et le séparateur de faisceau (17) et parvient en passant par le deuxième élément optique (27) à la bouteille (2) en éclairant cette dernière,
- l'image de la bouteille éclairée se reflète sur le côté miroir (22) du séparateur de faisceau (17) du côté d'inspection (8) opposé et est enregistrée par la deuxième caméra (13) du côté d'inspection (8), laquelle caméra est reliée à un dispositif de traitement d'image correspondant,
- après la désactivation de la source de lumière (14) du premier côté d'inspection (7), la source de lumière (14) du deuxième côté d'inspection (8) est activée et émet de la lumière à la manière d'un flash et sachant que
- les étapes énumérées ci-dessus sont exécutées de manière identique.

11. Procédé selon la revendication 10, **caractérisé en ce que** les deux sources de lumière (14) émettent en alternance de la lumière à la manière d'impulsions ou de flash, **en ce que** la source de lumière (14) de chaque autre côté d'inspection est activée après la désactivation de la source de lumière précédente (14), en particulier après 100 µs.
